# EUROPÄISCHE PATENTSCHRIFT

(11) **EP 3 928 611 B1**
(45) Veröffentlichungstag und Bekanntmachung des Hinweises auf die Patenterteilung: **13.03.2024**
(21) Anmeldenummer: 20181948.9
(22) Anmeldetag: 24.06.2020
(51) Int. Cl.: A01D 34/69, A01D 34/68

(54) **GARTENGERÄT**
GARDEN DEVICE
APPAREIL DE JARDINAGE

(43) Veröffentlichungstag der Anmeldung: 29.12.2021
(73) Patentinhaber: Andreas Stihl AG & Co. KG, 71336 Waiblingen (DE)
(72) Erfinder: GASSNER, Markus, 6345 Kössen (AT); PANTEL, Laura, 83064 Raubling (DE)
(74) Vertreter: Patentanwälte Ruff, Wilhelm, Beier, Dauster & Partner mbB

(56) Entgegenhaltungen:
- US-A1- 2005 247 508
- US-A1- 2010 025 124
- US-A1- 2020 107 497

## Beschreibung

Die Erfindung bezieht sich auf ein Gartengerät.

Die US 2020/107497 A1 offenbart einen Mäher mit einer Griffbaugruppe, einem relativ zu der Griffbaugruppe bewegbaren Griff, einem Sensor, der betreibbar ist, um ein Ausgangssignal basierend auf einer Position des Griffs relativ zu der Griffbaugruppe zu erzeugen, einer Antriebsbaugruppe und einen mit dem Sensor und der Antriebsbaugruppe gekoppelten Kontroller. Der Kontroller empfängt das Ausgangssignal und kontrolliert die Antriebsanordnung entsprechend dem Ausgangssignal.

### AUFGABE UND LÖSUNG

Der Erfindung liegt als Aufgabe die Bereitstellung eines Gartengeräts zugrunde, das verbesserte Eigenschaften aufweist.

Die Erfindung löst diese Aufgabe durch die Bereitstellung eines Gartengeräts mit den Merkmalen des Anspruchs 1. Vorteilhafte Weiterbildungen und/oder Ausgestaltungen der Erfindung sind in den abhängigen Ansprüchen beschrieben.

Das erfindungsgemäße, insbesondere elektrische, Gartengerät umfasst bzw. weist ein, insbesondere elektrisch, steuerbares, insbesondere elektrisches, Fahrantriebssystem und eine, insbesondere elektrische, Geschwindigkeitssteuerungsvorrichtung, insbesondere Geschwindigkeitsregelungsvorrichtung, auf. Das Fahrantriebssystem ist zur, insbesondere automatischen, Fortbewegung des Gartengeräts ausgebildet bzw. konfiguriert. Die Geschwindigkeitssteuerungsvorrichtung umfasst bzw. weist ein, insbesondere variabel, benutzerbetätigbares, insbesondere benutzerbewegliches, Bedienelement und eine, insbesondere elektrische, Wegsensorvorrichtung auf. Mindestens ein Sensorteil der Wegsensorvorrichtung, insbesondere die vollständige Wegsensorvorrichtung, ist, insbesondere variabel und/oder linear, translatorisch beweglich bzw. verschiebbar gelagert. Das Bedienelement ist durch seine Betätigung, insbesondere seine Bewegung, zur translatorischen Verlagerung bzw. Bewegung bzw. Verschiebung mindestens des Sensorteils, insbesondere der vollständigen Wegsensorvorrichtung, ausgebildet bzw. konfiguriert. Ein, insbesondere elektrisches und/oder variabel einstellbares, Sensorsignal, insbesondere ein Wert des Sensorsignals, der Wegsensorvorrichtung ist von einer, insbesondere variabel einstellbaren, translatorischen Lage, insbesondere einem Wert der Lage, bzw. Weg mindestens des Sensorteils, insbesondere linear, abhängig. Die Geschwindigkeitssteuerungsvorrichtung ist zur, insbesondere automatischen und/oder elektrischen, Steuerung, insbesondere Regelung, des Fahrantriebssystems zur variablen Einstellung einer Fahrgeschwindigkeit, insbesondere eines Werts der Fahrgeschwindigkeit, des Gartengeräts in Abhängigkeit von dem Sensorsignal ausgebildet bzw. konfiguriert.

Dies, insbesondere das Fahrantriebssystem, ermöglicht, dass ein Benutzer des Gartengeräts dieses nicht zu schieben braucht. Des Weiteren ermöglicht dies, insbesondere die variable Einstellung der Fahrgeschwindigkeit, dass die Fahrgeschwindigkeit nicht nur einen einzigen Wert aufweisen kann. Somit ermöglicht dies einen hohen Komfort für den Benutzer. Außerdem ermöglicht dies, insbesondere die translatorische Bewegung bzw. Verlagerung mindestens des Sensorteils, einen einfachen und/oder zuverlässigen und/oder kostengünstigen Aufbau der Geschwindigkeitssteuerungsvorrichtung.

Insbesondere kann das Gartengerät ein Gartenbearbeitungsgerät, insbesondere ein Rasenmäher, sein. Zusätzlich oder alternativ kann das Gartengerät handgeführt (Englisch: hand-held) und/oder bodengeführt sein. Insbesondere kann handgeführtes Gartengerät bedeuten, dass das Gartengerät eine Masse von maximal 100 Kilogramm (kg), insbesondere von maximal 50 kg, insbesondere von maximal 20 kg, und/oder von minimal 5 kg, insbesondere von minimal 10 kg, aufweisen kann.

Das Fahrantriebsystem kann Räder und/oder ein Motorantriebssystem, insbesondere zum Antrieb der Räder, aufweisen.

Die Geschwindigkeitssteuerungsvorrichtung kann ein Gehäuse aufweisen. Insbesondere kann mindestens das Sensorteil, insbesondere die vollständige Wegsensorvorrichtung, in Bezug auf, insbesondere durch, das Gehäuse translatorisch beweglich gelagert sein. Zusätzlich oder alternativ braucht oder kann mindestens das Sensorteil, insbesondere die vollständige Wegsensorvorrichtung, nicht rotatorisch beweglich, insbesondere gelagert, zu sein.

Das Bedienelement kann zur Verlagerung mindestens des Sensorteils mit diesem, insbesondere unmittelbar und/oder mittelbar, zusammenwirken, insbesondere dieses berühren.

Das Bedienelement kann durch seine Betätigung zur Verlagerung mindestens des Sensorteils zur variablen Einstellung der Lage ausgebildet sein. In anderen Worten: Die Lage kann durch die Verlagerung variabel eingestellt sein.

Das Sensorsignal kann sich mit zunehmender Lage, insbesondere zunehmend und/oder abnehmend, verändern.

Variabel kann kontinuierlich bzw. stetig bedeuten. Zusätzlich oder alternativ kann variabel einstellbar auf mindestens drei verschiedene Werte und/oder mindestens zwei von Null verschiedene Werte einstellbar bedeuten. Weiter zusätzlich oder alternativ kann zur variablen Einstellung zur Einstellung auf mindestens drei verschiedene Werte und/oder mindestens zwei von Null verschiedene Werte bedeuten.

Das Sensorteil und ein weiteres Sensorteil der Wegsensorvorrichtung sind zueinander, insbesondere variabel und/oder linear, translatorisch beweglich bzw. verschiebbar gelagert. Das Sensorsignal ist von der Lage, insbesondere nur, des Sensorteils und des weiteren Sensorteils zueinander abhängig. Dies ermöglicht, dass das Sensorsignal variabel einstellbar sein kann. Insbesondere kann das Bedienelement durch seine Betätigung zur Verlagerung des Sensorteils und des weiteren Sensorteils zueinander, insbesondere zur variablen Einstellung der Lage, ausgebildet sein. Zusätzlich oder alternativ kann das weitere Sensorteil durch das Sensorteil, insbesondere variabel und/oder linear, translatorisch beweglich bzw. verschiebbar gelagert sein. Weiter zusätzlich oder alternativ brauchen oder können das Sensorteil und das weitere Sensorteil zueinander nicht rotatorisch beweglich, insbesondere gelagert, zu sein.

Die Geschwindigkeitssteuerungsvorrichtung umfasst bzw. weist ein, insbesondere mechanisches, Begrenzungselement auf. Das Begrenzungselement ist zur, insbesondere mechanischen, Begrenzung, insbesondere Verhinderung, einer translatorischen Verlagerung bzw. Bewegung bzw. Verschiebung des weiteren Sensorteils bei Betätigung des Bedienelements, insbesondere zur Ermöglichung, zur translatorischen Verlagerung des Sensorteils und des weiteren Sensorteils zueinander ausgebildet bzw. konfiguriert. Insbesondere kann das Begrenzungselement zur Begrenzung der Verlagerung des weiteren Sensorteils mit diesem, insbesondere unmittelbar, zusammenwirken, insbesondere dieses berühren. Zusätzlich oder alternativ kann das Begrenzungselement zur Begrenzung der Verlagerung des weiteren Sensorteils in Bezug auf das Gehäuse, soweit vorhanden, ausgebildet sein.

Das Begrenzungselement ist, insbesondere variabel, beweglich gelagert. Das Bedienelement ist durch seine Betätigung, insbesondere seine Bewegung, zur translatorischen Verlagerung bzw. Bewegung bzw. Verschiebung des weiteren Sensorteils ausgebildet bzw. konfiguriert. Die Geschwindigkeitssteuerungsvorrichtung umfasst bzw. weist ein weiteres benutzerbetätigbares, insbesondere benutzerbewegliches, Bedienelement auf. Das weitere Bedienelement ist durch seine Betätigung, insbesondere seine Bewegung, zur Bewegung des Begrenzungselements zur variabel einstellbaren Begrenzung der Verlagerung des weiteren Sensorteils, insbesondere bewirkt durch die Betätigung des Bedienelements, ausgebildet bzw. konfiguriert. Dies ermöglicht eine variable Einstellung einer maximalen Fahrgeschwindigkeit, insbesondere eines Werts der maximalen Fahrgeschwindigkeit, des Gartengeräts. Somit ermöglicht dies einen besonders hohen Komfort für den Benutzer. Insbesondere kann das Begrenzungselement in Bezug auf, insbesondere durch, das Gehäuse, soweit vorhanden, beweglich gelagert sein. Zusätzlich oder alternativ kann das weitere Sensorteil in Bezug auf das Gehäuse, soweit vorhanden, insbesondere variabel und/oder linear, translatorisch beweglich bzw. verschiebbar gelagert sein. Weiter zusätzlich oder alternativ braucht oder kann das weitere Sensorteil nicht rotatorisch beweglich, insbesondere gelagert, zu sein. Weiter zusätzlich oder alternativ kann das Bedienelement zur Verlagerung des weiteren Sensorteils mit diesem, insbesondere mittels des Sensorteils, zusammenwirken. Weiter zusätzlich oder alternativ kann das weitere Bedienelement zur Bewegung des Begrenzungselements mit diesem, insbesondere unmittelbar und/oder mittelbar, zusammenwirken.

In einer Weiterbildung der Erfindung umfasst bzw. weist die Wegsensorvorrichtung einen, insbesondere elektrischen, Schalter auf. Ein, insbesondere elektrischer und/oder einstellbarer, Schaltzustand, insbesondere ein Wert des Schaltzustands, des Schalters ist von der Lage abhängig. Die Geschwindigkeitssteuerungsvorrichtung, insbesondere der Schalter, ist zum, insbesondere automatischen, Freigeben, insbesondere Einschalten, und/oder Sperren, insbesondere Ausschalten, des Fahrantriebssystems in Abhängigkeit von dem Schaltzustand ausgebildet. Dies ermöglicht eine hohe Sicherheit der Geschwindigkeitssteuerungsvorrichtung, insbesondere bei einer Fehlsteuerung des Fahrantriebssystems, und somit des Gartengeräts. Insbesondere können der Schaltzustand und das Sensorsignal voneinander unabhängig und/oder verschieden, insbesondere verschiedenartig, sein. Weiter zusätzlich oder alternativ kann der Sensorteil ein Schalterteil des Schalters aufweisen und/oder mit diesem, insbesondere unmittelbar, zusammenwirken, insbesondere dieses berühren, und der weitere Sensorteil kann ein weiteres Schalterteil des Schalters aufweisen und/oder mit diesem, insbesondere unmittelbar, zusammenwirken, insbesondere dieses berühren.

Die Wegsensorvorrichtung braucht oder kann kein Drehpotentiometer aufzuweisen.

In einer Ausgestaltung der Erfindung umfasst bzw. weist die Wegsensorvorrichtung ein Linearpotentiometer auf. Das Sensorsignal ist ein Potentiometersignal des Linearpotentiometers. Dies ermöglicht, dass das Sensorsignal von der Lage des Sensorteils und des weiteren Sensorteils zueinander abhängig sein kann. Insbesondere kann der Sensorteil ein Potentiometerteil des Linearpotentiometers aufweisen und/oder mit diesem, insbesondere unmittelbar, zusammenwirken, insbesondere dieses berühren, und der weitere Sensorteil kann ein weiteres Potentiometerteil des Linearpotentiometers aufweisen und/oder mit diesem, insbesondere unmittelbar, zusammenwirken, insbesondere dieses berühren. Zusätzlich oder alternativ kann das Potentiometersignal ein, insbesondere elektrisches, Widerstandssignal und/oder eine, insbesondere elektrische, Spannung, insbesondere eine Hall-Spannung, aufweisen, insbesondere sein. Weiter zusätzlich oder alternativ kann das Linearpotentiometer von dem Schalter, soweit vorhanden, verschieden sein.

In einer Ausgestaltung der Erfindung umfasst bzw. weist die Geschwindigkeitssteuerungsvorrichtung ein weiteres, insbesondere mechanisches, Begrenzungselement auf. Das weitere Begrenzungselement ist zur, insbesondere mechanischen, Begrenzung der Betätigung des Bedienelements und/oder der Verlagerung des Sensorteils zur Begrenzung der Verlagerung des Sensorteils und des weiteren Sensorteils zueinander, insbesondere bewirkt durch die Betätigung des Bedienelements, ausgebildet bzw. konfiguriert. Insbesondere braucht oder kann das weitere Begrenzungselement in Bezug auf das Gehäuse nicht beweglich, insbesondere gelagert, zu sein. In anderen Worten: Das weitere Begrenzungselement kann in Bezug auf das Gehäuse unbeweglich bzw. fest sein. Insbesondere kann das weitere Begrenzungselement ein Teil des Gehäuses sein bzw. das Gehäuse kann das Begrenzungselement aufweisen. Zusätzlich oder alternativ kann das weitere Begrenzungselement zur Begrenzung der Betätigung des Bedienelements und/oder der Verlagerung des Sensorteils mit diesen/diesem, insbesondere unmittelbar und/oder mittelbar, zusammenwirken, insbesondere diese/dieses berühren. Weiter zusätzlich oder alternativ kann das weitere Begrenzungselement zur Begrenzung der Betätigung des Bedienelements und/oder der Verlagerung des Sensorteils in Bezug auf das Gehäuse, soweit vorhanden, ausgebildet sein.

In einer Ausgestaltung der Erfindung umfasst bzw. weist das Begrenzungselement zur variabel einstellbaren Begrenzung der Verlagerung des weiteren Sensorteils einen Exzenterkulissenabschnitt auf und ist rotatorisch beweglich bzw. drehbeweglich gelagert. Dies ermöglicht eine einfache und/oder zuverlässige Einstellung der Begrenzung. Insbesondere kann der Exzenterkulissenabschnitt zur Begrenzung der Verlagerung des weiteren Sensorteils mit diesem, insbesondere unmittelbar, zusammenwirken, insbesondere dieses berühren. Zusätzlich oder alternativ kann das weitere Bedienelement durch seine Betätigung zur rotatorischen Bewegung bzw. Drehbewegung des Begrenzungselements zur variabel einstellbaren Begrenzung der Verlagerung des weiteren Sensorteils ausgebildet sein. Weiter zusätzlich oder alternativ braucht oder kann das Begrenzungselement nicht translatorisch beweglich, insbesondere gelagert, zu sein. Weiter zusätzlich oder alternativ können eine Verlagerungsachse des weiteren Sensorteils und eine Rotationsachse des Begrenzungselements zueinander nicht-parallel, insbesondere orthogonal und/oder windschief, verlaufen.

In einer Ausgestaltung der Erfindung verlaufen bei Begrenzung der Verlagerung des weiteren Sensorteils seine Verlagerungsachse und eine Oberfläche des Exzenterkulissenabschnitts etwa, insbesondere genau, orthogonal zueinander. Dies ermöglicht ein Drehmoment von dem weiteren Sensorteil auf das Begrenzungselement zu reduzieren oder sogar zu verhindern. Somit ermöglicht dies eine unbeabsichtigte Verstellung des Begrenzungselements zu verhindern. Insbesondere kann die Oberfläche mit dem weiteren Sensorteil, insbesondere unmittelbar, zusammenwirken, insbesondere dieses berühren. Zusätzlich oder alternativ kann etwa eine Abweichung, insbesondere eine Winkelabweichung, von maximal 15 Grad (°), insbesondere von maximal 5 °, insbesondere von maximal 1 °, bedeuten.

In einer Ausgestaltung der Erfindung umfasst bzw. weist die Geschwindigkeitssteuerungsvorrichtung eine Verrastungsmechanik auf. Die Verrastungsmechanik ist zur, mechanischen und/oder stufenweisen, Verrastung der, insbesondere variablen, Einstellung des Begrenzungselements ausgebildet bzw. konfiguriert. Dies ermöglicht eine unbeabsichtigte Verstellung des Begrenzungselements zu verhindern. Insbesondere kann die Verrastung, zerstörungsfrei und/oder werkzeugfrei, lösbar sein. Zusätzlich oder alternativ kann die Verrastungsmechanik mit dem Begrenzungselement, insbesondere unmittelbar und/oder mittelbar, zusammenwirken. Insbesondere kann die Verrastungsmechanik teilweise ein Teil des Begrenzungselements sein bzw. das Begrenzungselement kann einen Teil der Verrastungsmechanik aufweisen. Weiter zusätzlich oder alternativ kann die Verrastungsmechanik zur Verrastung der Einstellung des Begrenzungselements in Bezug auf das Gehäuse, soweit vorhanden, ausgebildet sein.

In einer Ausgestaltung der Erfindung ist die Verrastungsmechanik federnd, insbesondere umfasst bzw. weist die Verrastungsmechanik eine Körperfeder auf. Dies ermöglicht einen einfachen und/oder zuverlässigen Aufbau der Verrastungsmechanik.

In einer Ausgestaltung der Erfindung ist das weitere Bedienelement rotatorisch beweglich bzw. drehbeweglich gelagert. Dies ermöglicht einen einfachen und/oder zuverlässigen Aufbau der Geschwindigkeitssteuerungsvorrichtung. Insbesondere kann das weitere Bedienelement durch seine rotatorische Bewegung bzw. Drehbewegung zur Bewegung des Begrenzungselements zur variabel einstellbaren Begrenzung der Verlagerung des weiteren Sensorteils ausgebildet sein. Zusätzlich oder alternativ kann das weitere Bedienelement in Bezug auf, insbesondere durch, das Gehäuse rotatorisch beweglich gelagert sein. Weiter zusätzlich oder alternativ braucht oder kann das weitere Bedienelement nicht translatorisch beweglich, insbesondere gelagert, zu sein.

In einer Weiterbildung, insbesondere einer Ausgestaltung, der Erfindung umfasst bzw. weist die Geschwindigkeitssteuerungsvorrichtung, insbesondere die Wegsensorvorrichtung, ein Sensorrückstellelement auf. Das Sensorrückstellelement ist zur Kraftbeaufschlagung mindestens des Sensorteils, insbesondere und des weiteren Sensorteils voneinander weg, in eine translatorische Sensorausgangslage ausgebildet bzw. konfiguriert. Dies ermöglicht eine automatische Deaktivierung des Fahrantriebssystems bzw. eine Einstellung der Fahrgeschwindigkeit auf null. Somit ermöglicht dies eine hohe Sicherheit der Geschwindigkeitssteuerungsvorrichtung und somit des Gartengeräts. Insbesondere kann das Sensorrückstellelement eine Feder, insbesondere eine Schraubenfeder, aufweisen, insbesondere sein. Zusätzlich oder alternativ kann das Sensorrückstellelement zur Kraftbeaufschlagung mindestens des Sensorteils, insbesondere und des weiteren Sensorteils voneinander weg, in die Sensorausgangslage mit dem Sensorteil, insbesondere und dem weiteren Sensorteil, insbesondere unmittelbar, zusammenwirken, insbesondere dieses/diese berühren. Weiter zusätzlich oder alternativ kann das Bedienelement zur Verlagerung des weiteren Sensorteils mit diesem mittels des Sensorrückstellelements zusammenwirken.

In einer Weiterbildung der Erfindung ist das Bedienelement beweglich gelagert. Die Geschwindigkeitssteuerungsvorrichtung umfasst bzw. weist ein Bedienrückstellelement auf. Das Bedienrückstellelement ist zur Kraftbeaufschlagung des Bedienelements in eine Bedienausgangslage ausgebildet bzw. konfiguriert. Dies ermöglicht, dass das Bedienelement mindestens den Sensorteil nicht verlagern braucht oder kann. Somit ermöglicht dies eine automatische Deaktivierung des Fahrantriebssystems bzw. eine Einstellung der Fahrgeschwindigkeit auf null. Somit ermöglicht dies eine hohe Sicherheit der Geschwindigkeitssteuerungsvorrichtung und somit des Gartengeräts. Insbesondere kann das Bedienelement in Bezug auf, insbesondere durch, das Gehäuse beweglich gelagert sein. Zusätzlich oder alternativ kann das Bedienrückstellelement eine Feder, insbesondere eine Schraubenfeder, aufweisen, insbesondere sein. Weiter zusätzlich oder alternativ kann das Bedienrückstellelement zur Kraftbeaufschlagung des Bedienelements in die Bedienausgangslage mit diesem, insbesondere unmittelbar, zusammenwirken, insbesondere dieses berühren. Weiter zusätzlich oder alternativ kann das Bedienrückstellelement von dem Sensorrückstellelement, soweit vorhanden, verschieden sein.

In einer Weiterbildung der Erfindung ist das Bedienelement rotatorisch beweglich bzw. drehbeweglich gelagert. Dies ermöglicht einen einfachen und/oder zuverlässigen Aufbau der Geschwindigkeitssteuerungsvorrichtung. Insbesondere kann das Bedienelement durch seine rotatorische Bewegung bzw. Drehbewegung zur Verlagerung mindestens des Sensorteils ausgebildet sein. Zusätzlich oder alternativ kann das Bedienelement in Bezug auf, insbesondere durch, das Gehäuse rotatorisch beweglich gelagert sein. Weiter zusätzlich oder alternativ braucht oder kann das Bedienelement nicht translatorisch beweglich, insbesondere gelagert, zu sein. Weiter zusätzlich oder alternativ können eine Verlagerungsachse mindestens des Sensorteils und eine Rotationsachse des Bedienelements zueinander nicht-parallel, insbesondere orthogonal und/oder windschief, verlaufen.

### KURZBESCHREIBUNG DER ZEICHNUNGEN

Weitere Vorteile und Aspekte der Erfindung ergeben sich aus den Ansprüchen und aus der nachfolgenden Beschreibung von mindestens einem bevorzugten Ausführungsbeispiel der Erfindung, die nachfolgend anhand der Figuren erläutert sind. Dabei zeigen:
- Fig. 1: eine Perspektivansicht eines erfindungsgemäßen Gartengeräts aufweisend ein steuerbares Fahrantriebssystem und eine Geschwindigkeitssteuerungsvorrichtung,
- Fig. 2: eine Perspektivansicht der Geschwindigkeitssteuerungsvorrichtung,
- Fig. 3: eine Seitenansicht der Geschwindigkeitssteuerungsvorrichtung,
- Fig. 4: eine Schnittansicht der Geschwindigkeitssteuerungsvorrichtung aufweisend ein Bedienelement nicht betätigt und ein Begrenzungselement nicht bewegt,
- Fig. 5: eine Schnittansicht der Geschwindigkeitssteuerungsvorrichtung aufweisend das Bedienelement maximal betätigt, das Begrenzungselement nicht bewegt und eine Wegsensorvorrichtung durch das maximal betätigte Bedienelement maximal translatorisch verlagert aufweisend ein Sensorteil und ein weiteres Sensorteil zueinander durch das betätigte Bedienelement und das nicht bewegte Begrenzungselement nicht translatorisch verlagert,
- Fig. 6: eine Schnittansicht der Geschwindigkeitssteuerungsvorrichtung aufweisend das Bedienelement maximal betätigt, das Begrenzungselement bewegt und das Sensorteil und das weitere Sensorteil zueinander durch das betätigte Bedienelement und das bewegte Begrenzungselement verlagert,
- Fig. 7: eine Schnittansicht der Geschwindigkeitssteuerungsvorrichtung aufweisend das Bedienelement nicht betätigt, das Begrenzungselement maximal bewegt und das Sensorteil und das weitere Sensorteil zueinander durch das nicht betätigte Bedienelement und das maximal bewegte Begrenzungselement nicht verlagert,
- Fig. 8: eine Schnittansicht der Geschwindigkeitssteuerungsvorrichtung aufweisend das Bedienelement maximal betätigt, das Begrenzungselement maximal bewegt und das Sensorteil und das weitere Sensorteil zueinander durch das maximal betätigte Bedienelement und das maximal bewegte Begrenzungselement maximal verlagert,
- Fig. 9: eine Perspektivansicht der Wegsensoreinrichtung,
- Fig. 10: eine Schnittansicht der Wegsensoreinrichtung aufweisend einen Schalter, ein Linearpotentiometer und ein Sensorrückstellelement,
- Fig. 11: einen Graphen eines Schaltzustands des Schalter über einer Lage des Sensorteils und des weiteren Sensorteils zueinander,
- Fig. 12: einen Graphen eines Sensorsignals in Form eines Potentiometersignals des Linearpotentiometers über einer Lage des Sensorteils und des weiteren Sensorteils zueinander,
- Fig. 13: einen Graphen einer Kraft des Sensorrückstellelements über einer Lage des Sensorteils und des weiteren Sensorteils zueinander,
- Fig. 14: einen Graphen eines Fahrgeschwindigkeit des Gartengeräts für verschiedene Betätigungen des Bedienelements und verschiedene Bewegungen des Begrenzungselements, und
- Fig. 15: eine weitere Schnittansicht der Geschwindigkeitssteuerungsvorrichtung aufweisend das Bedienelement maximal betätigt wie in Fig. 5.

### DETAILLIERTE BESCHREIBUNG DER AUSFÜHRUNGSBEISPIELE

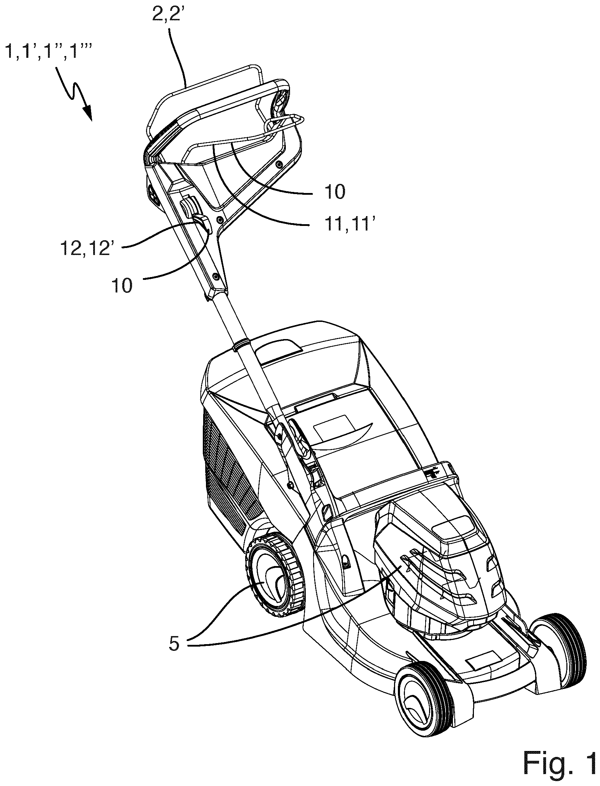

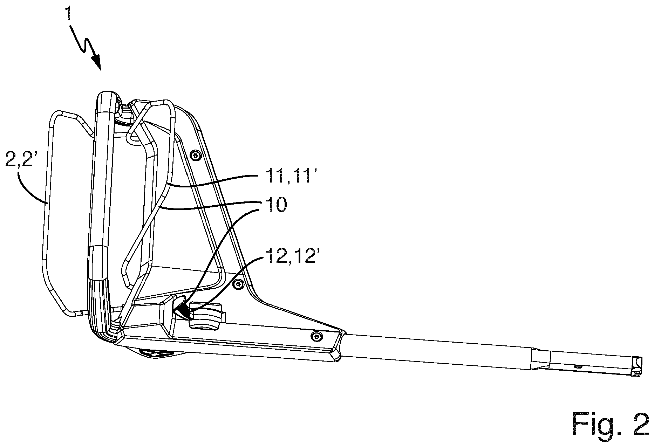

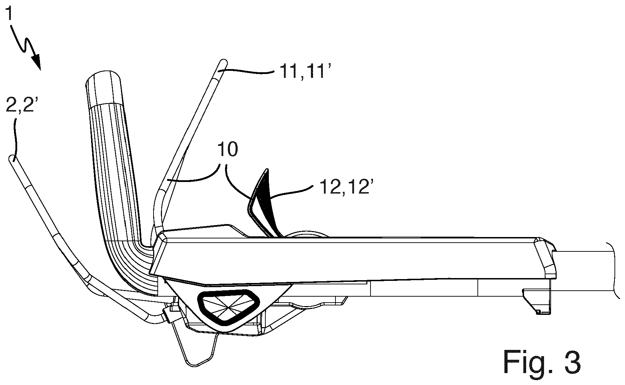

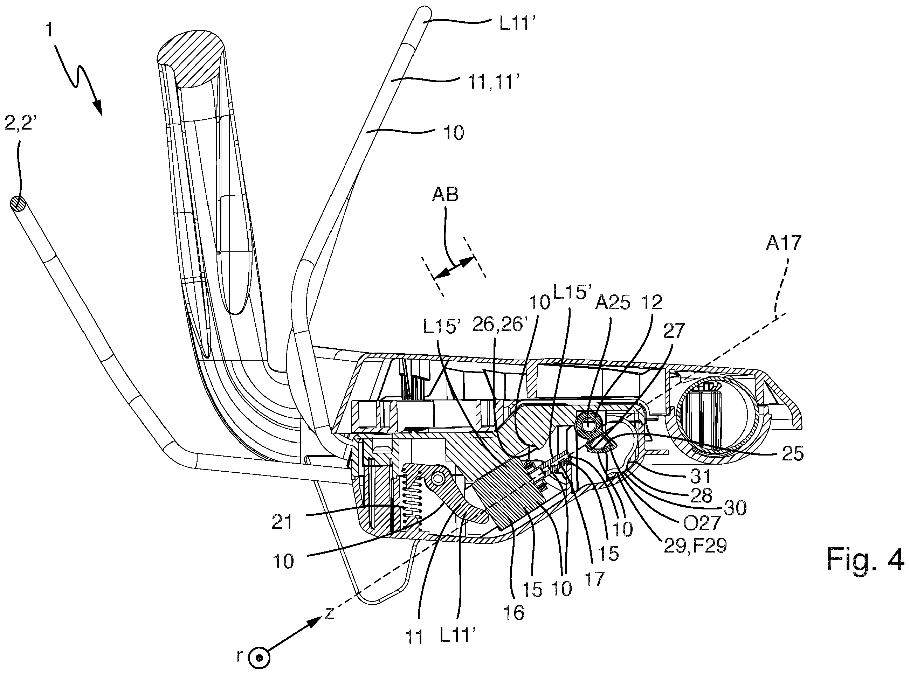

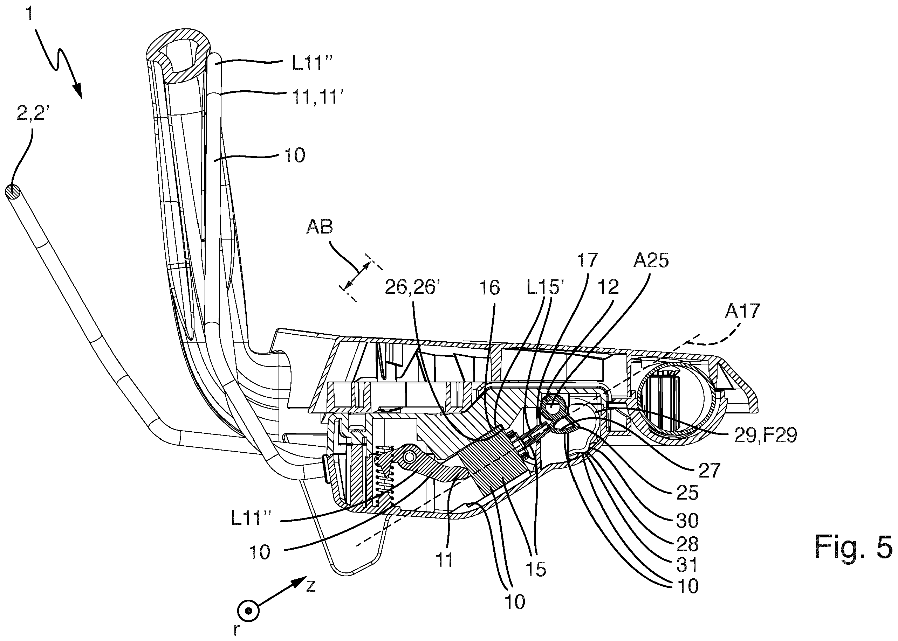

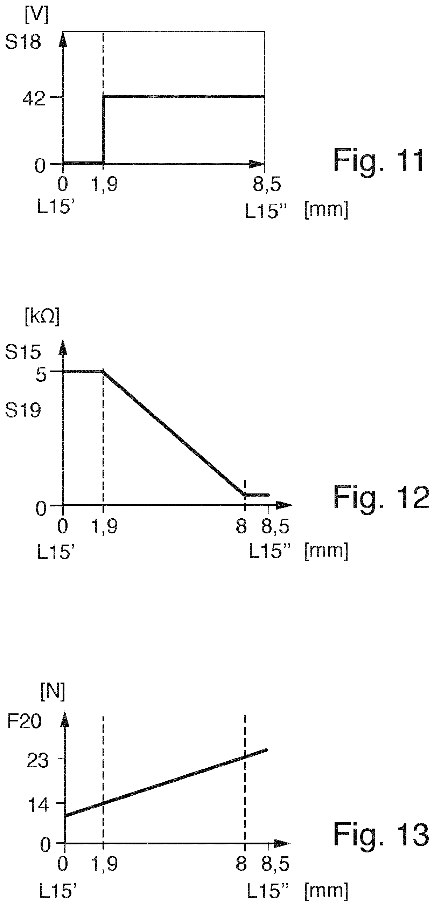

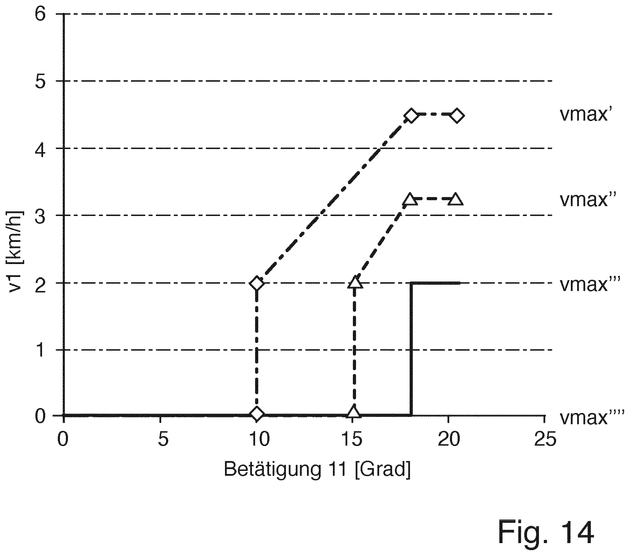

Fig. 1 zeigt ein erfindungsgemäßes Gartengerät 1. Das Gartengerät 1 weist ein steuerbares Fahrantriebssystem 5 und eine Geschwindigkeitssteuerungsvorrichtung 10 auf wie in Fig. 2 und 3 gezeigt. Das Fahrantriebssystem 5 ist zur Fortbewegung des Gartengeräts 1 ausgebildet, insbesondere bewegt fort. Die Geschwindigkeitssteuerungsvorrichtung 10 weist ein benutzerbetätigbares Bedienelement 11, in dem gezeigten Ausführungsbeispiel aufweisend einen Bügel 11', und eine Wegsensorvorrichtung 15 auf, wie in Fig. 4 bis 10 gezeigt. Mindestens ein Sensorteil 16 der Wegsensorvorrichtung, in dem gezeigten Ausführungsbeispiel die vollständige Wegsensorvorrichtung 15, ist translatorisch beweglich gelagert, insbesondere bewegt bzw. verlagert, wie in Fig. 5, 6 und 8 gezeigt, in dem gezeigten Ausführungsbeispiel in einer Richtung z. Das Bedienelement 11 ist durch seine Betätigung zur, insbesondere unmittelbaren, translatorischen Verlagerung mindestens des Sensorteils 16, in dem gezeigten Ausführungsbeispiel der vollständigen Wegsensorvorrichtung 15, ausgebildet, insbesondere verlagert, wie in Fig. 5, 6 und 8 gezeigt, in dem gezeigten Ausführungsbeispiel in der Richtung z. Ein Sensorsignal S15 der Wegsensorvorrichtung 15 ist von einer translatorischen Lage L15`, L15" mindestens des Sensorteils 16, in dem gezeigten Ausführungsbeispiel in der Richtung z, abhängig, wie in Fig. 12 gezeigt. Die Geschwindigkeitssteuerungsvorrichtung 10 ist zur Steuerung des Fahrantriebssystems 5 zur variablen Einstellung einer Fahrgeschwindigkeit v1 des Gartengeräts 1 in Abhängigkeit von dem Sensorsignal S15 ausgebildet, wie in Fig. 14 gezeigt, insbesondere steuert, insbesondere und somit stellt das Fahrantriebssystem 5 variabel ein.

In dem gezeigten Ausführungsbeispiel ist das Gartengerät 1 ein Rasenmäher 1'.

Im Detail weist das Gartengerät 1 ein nicht gezeigtes Gartenwerkzeug, insbesondere ein Gartenbearbeitungswerkzeug, in dem gezeigten Ausführungsbeispiel ein Rasenmähwerkzeug, ein nicht gezeigtes bedienbares Werkzeugantriebssystem zum Antrieb des Gartenwerkzeugs und ein anderes Bedienelement 2, in dem gezeigten Ausführungsbeispiel aufweisend einen anderen Bügel 2`, zur Bedienung des Werkzeugantriebssystems auf.

Des Weiteren weist in dem gezeigten Ausführungsbeispiel das Fahrantriebsystem 5 zwei Räder und ein nicht gezeigtes Motorantriebssystem zum Antrieb der zwei Räder auf.

Im Übrigen weist in dem gezeigten Ausführungsbeispiel das Gartengerät 1 zwei weitere, insbesondere nicht angetriebene, Räder auf.

Außerdem ist in dem gezeigten Ausführungsbeispiel das Gartengerät 1 ein elektrisches Gartengerät 1", insbesondere ein Akku-Gartengerät 1".

Weiter ist das Bedienelement 11, insbesondere rotatorisch, beweglich gelagert, insbesondere bewegt bzw. verlagert, wie in Fig. 5, 6 und 8 gezeigt, in dem gezeigten Ausführungsbeispiel um eine zu der Richtung z orthogonale Richtung r herum.

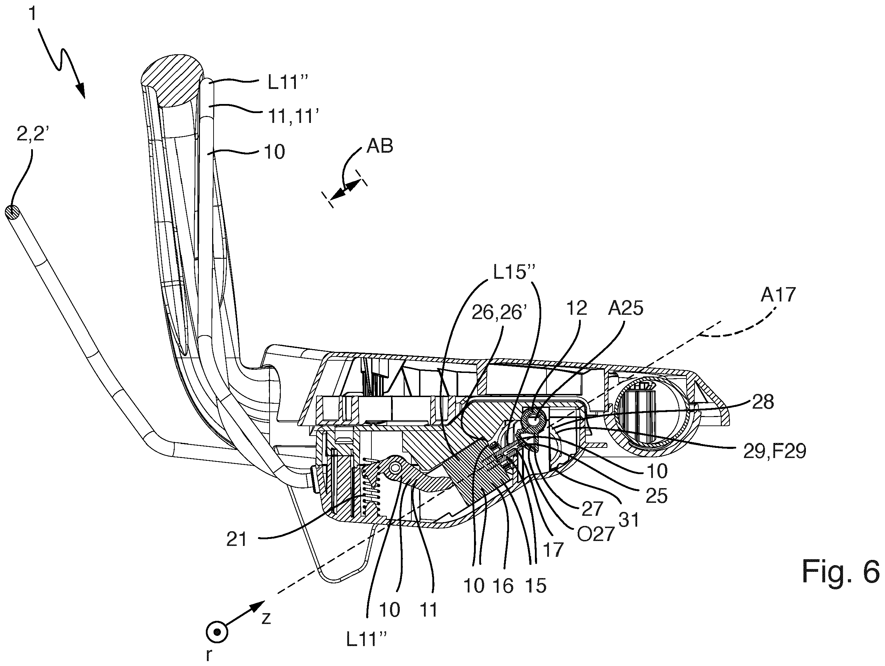

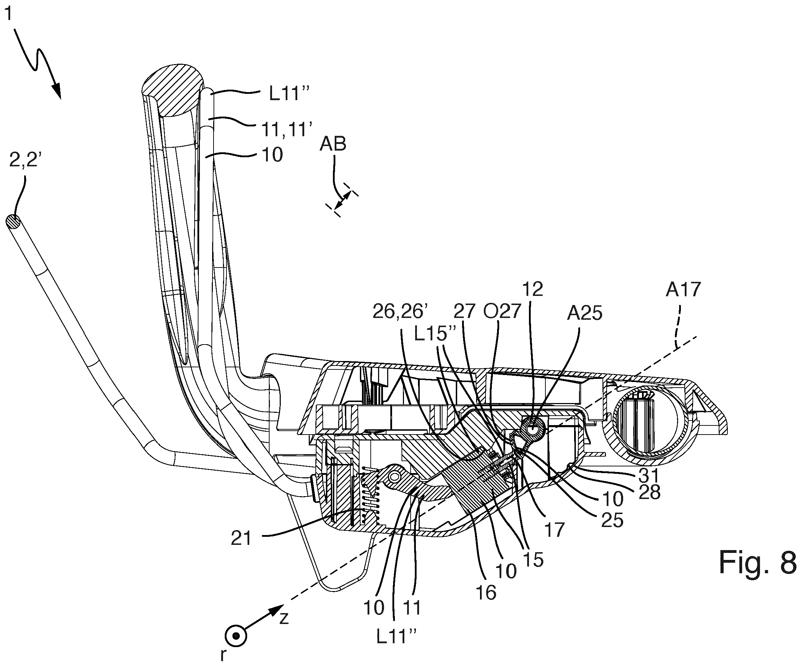

Zudem sind das Sensorteil 16 und ein weiteres Sensorteil 17 der Wegsensorvorrichtung 15 zueinander translatorisch beweglich gelagert, insbesondere bewegt bzw. verlagert, wie in Fig. 6 und 8 gezeigt, in dem gezeigten Ausführungsbeispiel in der Richtung z. Das Sensorsignal S15 ist von der Lage L15`, L15" des Sensorteils 16 und des weiteren Sensorteils 17 zueinander abhängig.

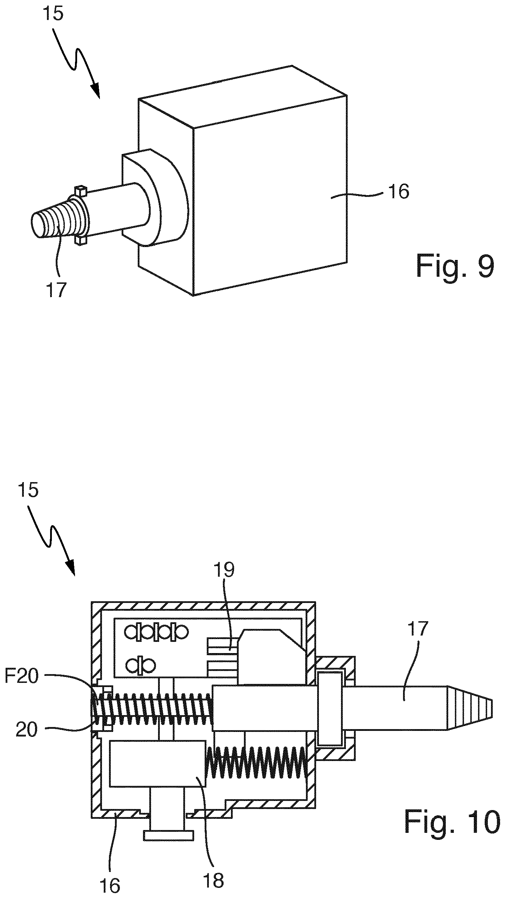

Des Weiteren weist die Wegsensorvorrichtung 15 ein Linearpotentiometer 19 auf, wie in Fig. 10 gezeigt. Das Sensorsignal S15 ist ein Potentiometersignal S19 des Linearpotentiometers 19, wie in Fig. 12 gezeigt.

Insbesondere verändert das Sensorsignal S15, in dem gezeigten Ausführungsbeispiel in Form des Potentiometersignals S19, sich mit zunehmender Lage L15", insbesondere abnehmend.

Außerdem weist die Geschwindigkeitssteuerungsvorrichtung 10 ein Begrenzungselement 25 auf, wie in Fig. 4 bis 8 gezeigt. Das Begrenzungselement 25 ist zur, unmittelbaren, Begrenzung einer translatorischen Verlagerung des weiteren Sensorteils 17, in dem gezeigten Ausführungsbeispiel in der Richtung z, bei Betätigung des Bedienelements 11 zur translatorischen Verlagerung des Sensorteils 16 und des weiteren Sensorteils 17 zueinander ausgebildet, insbesondere begrenzt, wie in Fig. 6 bis 8 gezeigt.

Im Detail ist das Begrenzungselement 25, insbesondere rotatorisch, beweglich gelagert, insbesondere bewegt bzw. verlagert, wie in Fig. 6 bis 8 gezeigt, in dem gezeigten Ausführungsbeispiel um die Richtung r herum.

Zusätzlich ist das Bedienelement 11 durch seine Betätigung zur translatorischen Verlagerung des weiteren Sensorteils 17 ausgebildet, insbesondere verlagert, wie in Fig. 5, 6 und 8 gezeigt, in dem gezeigten Ausführungsbeispiel in der Richtung z. Die Geschwindigkeitssteuerungsvorrichtung weist ein weiteres benutzerbetätigbares Bedienelement 12, in dem gezeigten Ausführungsbeispiel aufweisend einen Hebel 12', auf, wie in Fig. 1 bis 3 gezeigt. Das weitere Bedienelement 12 ist durch seine Betätigung zur, insbesondere unmittelbaren, Bewegung des Begrenzungselements 25, in dem gezeigten Ausführungsbeispiel um die Richtung r herum, zur variabel einstellbaren Begrenzung der Verlagerung des weiteren Sensorteils 17 ausgebildet, insbesondere bewegt, wie in Fig. 6 bis 8 gezeigt, in dem gezeigten Ausführungsbeispiel um die Richtung r herum.

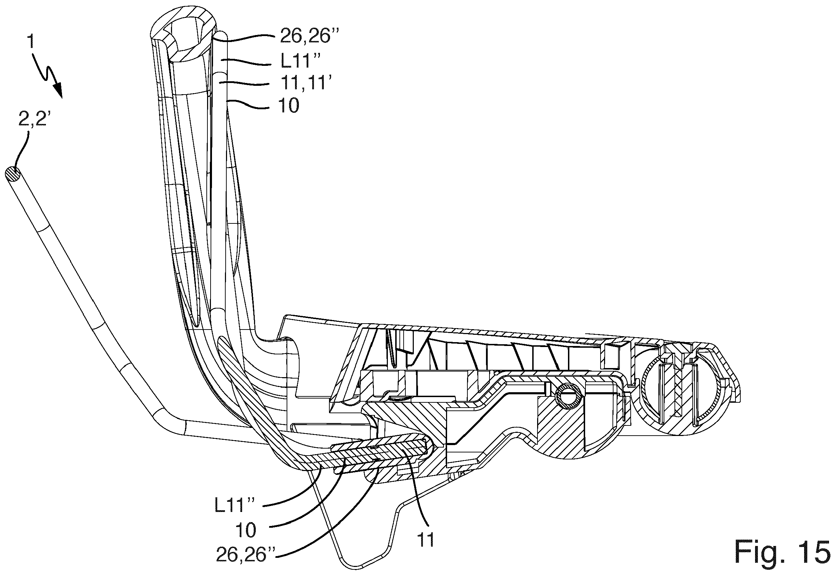

Weiter weist die Geschwindigkeitssteuerungsvorrichtung 10 ein weiteres Begrenzungselement 26, in dem gezeigten Ausführungsbeispiel in Form eines Absatzes 26' und/oder mindestens eines Anschlags 26", auf, wie in Fig. 4 bis 8 und 15 gezeigt. Das weitere Begrenzungselement 26 ist, insbesondere mittels des Sensorteils 16, zur Begrenzung der Betätigung des Bedienelements 11 und/oder zur, insbesondere unmittelbaren, Begrenzung der Verlagerung des Sensorteils 16 zur Begrenzung der Verlagerung des Sensorteils 16 und des weiteren Sensorteils 17 zueinander ausgebildet, insbesondere begrenzt, wie in Fig. 5, 6, 8 und 15 gezeigt.

Zudem weist das Begrenzungselement 25 zur variabel einstellbaren Begrenzung der Verlagerung des weiteren Sensorteils 17 einen Exzenterkulissenabschnitt 27 auf und ist rotatorisch beweglich gelagert, wie in Fig. 4 bis 8 gezeigt

Im Detail verlaufen bei Begrenzung der Verlagerung des weiteren Sensorteils 17 seine Verlagerungsachse A17 und eine Oberfläche O27 des Exzenterkulissenabschnitts 27 etwa orthogonal zueinander.

Insbesondere verlaufen die Verlagerungsachse A17 des weiteren Sensorteils 17 und eine Rotationsachse A25 des Begrenzungselements 25 zueinander nicht-parallel, in dem gezeigten Ausführungsbeispiel orthogonal und/oder windschief.

In anderen Worten: Das weitere Bedienelement 12 ist durch seine Betätigung zur, insbesondere unmittelbaren, variablen Einstellung eines translatorischen Abstands AB des Begrenzungselements 25, insbesondere der Oberfläche O27 des Exzenterkulissenabschnitts 27, und des weiteren Begrenzungselements 26, in dem gezeigten Ausführungsbeispiel in Form des Absatzes 26', zueinander, in dem gezeigten Ausführungsbeispiel in der Richtung z, ausgebildet, insbesondere stellt variabel ein.

Des Weiteren weist die Geschwindigkeitssteuerungsvorrichtung eine Verrastungsmechanik 28 auf, wie in Fig. 4 bis 8 gezeigt. Die Verrastungsmechanik 28 ist zur, insbesondere unmittelbaren, Verrastung der Einstellung des Begrenzungselements 25 ausgebildet, insbesondere verrastet.

Im Detail ist die Verrastungsmechanik 28 federnd. Insbesondere weist die Verrastungsmechanik 28 eine Körperfeder 29 auf.

Insbesondere ist die Körperfeder 29, insbesondere rotatorisch, beweglich gelagert, insbesondere bewegt bzw. verlagert, wie in Fig. 6 bis 8 gezeigt, in dem gezeigten Ausführungsbeispiel um die Richtung r herum. Des Weiteren ist die Körperfeder 29 mit dem Begrenzungselement 25, insbesondere rotatorisch, fest verbunden, insbesondere sind diese integriert.

Außerdem weist die Verrastungsmechanik 28 mehrere, insbesondere nicht-bewegliche bzw. unbewegliche bzw. feste, Vertiefungen 31, insbesondere jeweils, zum Einrasten eines Vorsprungs 30 der Körperfeder 29 auf.

In alternativen Ausführungsbeispielen kann die Verrastungsmechanik zusätzlich oder alternativ eine Materialfeder, insbesondere eine Blattfeder, aufweisen. Weiter zusätzlich oder alternativ braucht oder kann die Feder, insbesondere die Körperfeder oder die Materialfeder, nicht, insbesondere rotatorisch, beweglich, insbesondere gelagert, bzw. nicht-beweglich bzw. unbeweglich bzw. fest und/oder mit dem Begrenzungselement nicht fest verbunden zu sein. Insbesondere können das Begrenzungselement und die Feder, insbesondere die Körperfeder oder die Materialfeder, zueinander korrespondierende Verrastungskonturen, insbesondere in Form mindestens einer Vertiefung und mindestens eines Vorsprungs, aufweisen.

Weiter ist in dem gezeigten Ausführungsbeispiel das weitere Bedienelement 12 rotatorisch beweglich gelagert, insbesondere bewegt bzw. verlagert, wie in Fig. 6 bis 8 gezeigt, in dem gezeigten Ausführungsbeispiel um die orthogonale Richtung r herum.

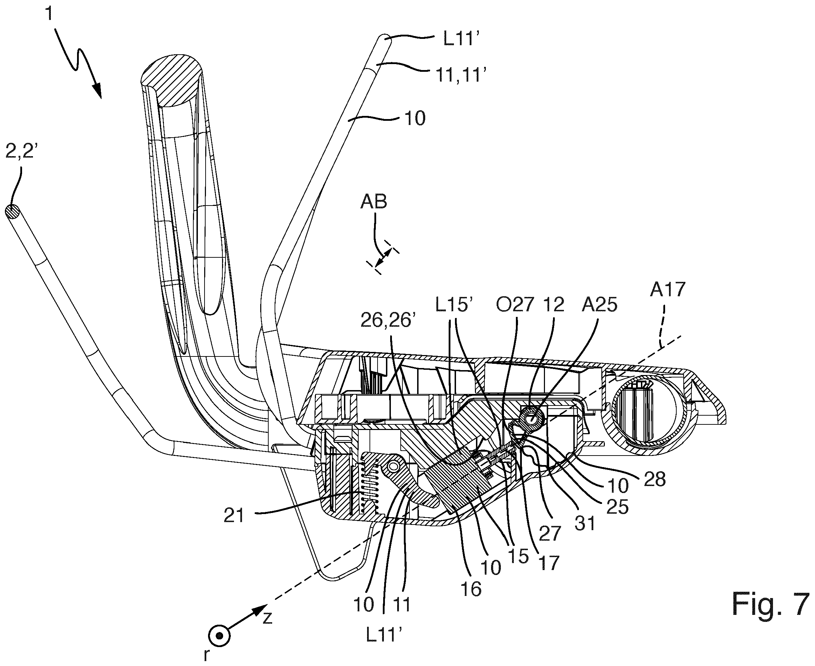

Zudem weist die Geschwindigkeitssteuerungsvorrichtung 10 ein Bedienrückstellelement 21 auf, wie in Fig. 4 und 6 bis 8 gezeigt. Das Bedienrückstellelement 21 ist zur, insbesondere unmittelbaren, Kraftbeaufschlagung des Bedienelements 11, insbesondere von einer Betätigungslage L11", wie in Fig. 5, 6 und 8 gezeigt, in eine Bedienausgangslage L11', wie in Fig. 4 und 7 gezeigt, ausgebildet, insbesondere kraftbeaufschlagt.

Des Weiteren weist die Geschwindigkeitssteuerungsvorrichtung 10, insbesondere die Wegsensorvorrichtung 15, ein Sensorrückstellelement 20 auf, wie in Fig. 10 gezeigt. Das Sensorrückstellelement 20 ist zur, insbesondere unmittelbaren, Kraftbeaufschlagung mindestens des Sensorteils 16, insbesondere und des weiteren Sensorteils 17 voneinander weg, insbesondere von einer translatorischen Verlagerungslage L15", wie in Fig. 6 und 8 gezeigt, in eine translatorische Sensorausgangslage L15`, wie in Fig. 4, 5 und 7 gezeigt, ausgebildet, insbesondere kraftbeaufschlagt.

Insbesondere ist das Bedienelement 11 durch seine Betätigung mittels des Sensorteils 16 und des Sensorrückstellelements 20 zur translatorischen Verlagerung des weiteren Sensorteils 17 ausgebildet, insbesondere verlagert.

In dem gezeigten Ausführungsbeispiel sind das Sensorrückstellelement 20 und die, insbesondere federnde Verrastungsmechanik 28, insbesondere die Körperfeder 29, derart dimensioniert, dass in einer maximalen Verlagerungslage 15" bzw. bei maximaler, insbesondere maximal möglicher, Verlagerung des Sensorteils 16 und des weiteren Sensorteils 17 zueinander, wie in Fig. 8 gezeigt, eine von dem weiteren Sensorteil 17 auf das Begrenzungselement 25, insbesondere die Oberfläche O27 des Exzenterkulissenabschnitts 27, ausgebübte Kraft F20, z.B. von 23 Newton (N), wie in Fig. 13 gezeigt, kleiner als eine zur Verstellung der Verrastungsmechanik 28, insbesondere der Körperfeder 29, auszuübende Kraft F29, z.B. von 25 N, ist. Dies ermöglicht eine unbeabsichtigte Verstellung des Begrenzungselements 25 zu verhindern.

Außerdem weist die Wegsensorvorrichtung 15 einen Schalter 18 auf, wie in Fig. 10 gezeigt. Ein Schaltzustand S18 des Schalters 18 ist von der Lage L15`, L15", insbesondere des Sensorteils 16 und des weiteren Sensorteils 17 zueinander, abhängig, wie in Fig. 11 gezeigt. Die Geschwindigkeitssteuerungsvorrichtung 10 ist zum, insbesondere unmittelbaren, Freigeben und/oder Sperren des Fahrantriebssystems 5 in Abhängigkeit von dem Schaltzustand S18 ausgebildet, insbesondere gibt frei, wie in Fig. 6 und 8 gezeigt, und sperrt, wie in Fig. 4, 5 und 7 gezeigt.

Im Detail weist die Geschwindigkeitssteuerungsvorrichtung 10 eine nicht gezeigte EC-Elektronik auf. Die EC-Elektronik ist dazu ausgebildet, in Abhängigkeit von dem Schaltzustand S18 ein Freigabesignal an eine nicht gezeigte DC-Elektronik des Fahrantriebssystems 5 auszugeben bzw. die DC-Elektronik aufzuwecken.

In Fig. 4 ist das Bedienelement 11 nicht betätigt bzw. in der Bedienausgangslage L11', insbesondere ist der Bügel 11' offen. Somit sind das Sensorteil 16 und das weitere Sensorteil 17 zueinander nicht verlagert bzw. in der Sensorausgangslage L15`. Somit ist der Schaltzustand S18 offen bzw. niedrig, wie in Fig. 11 gezeigt, und somit sperrt die Geschwindigkeitssteuerungsvorrichtung 10 das Fahrantriebssystem 5. Zusätzlich ist somit das Sensorsignal S15 hoch, wie in Fig. 12 gezeigt, und somit steuert die Geschwindigkeitssteuerungsvorrichtung 10 das Fahrantriebssystem 5 zur Einstellung der Fahrgeschwindigkeit v1 auf 0, wie in Fig. 14 gezeigt.

In Fig. 5 ist zwar das Bedienelement 11 maximal betätigt bzw. in einer maximalen Betätigungslage L11", insbesondere ist der Bügel 11' geschlossen, insbesondere durch das weitere Begrenzungselement 26 begrenzt. Jedoch ist das Begrenzungselement 25 derart bewegt bzw. eingestellt, insbesondere durch das weitere Bedienelement 12, insbesondere für eine maximale Fahrgeschwindigkeit vmaxʺʺ gleich 0, wie in Fig. 14 gezeigt, dass dieses die Verlagerung des weiteren Sensorteils 17, insbesondere durch das Bedienelement 11, nicht begrenzt. Somit sind das Sensorteil 16 und das weitere Sensorteil 17 zueinander nicht verlagert bzw. in der Sensorausgangslage L15`. Somit ist der Schaltzustand S18 niedrig und somit sperrt die Geschwindigkeitssteuerungsvorrichtung 10 das Fahrantriebssystem 5. Zusätzlich ist somit das Sensorsignal S15 hoch und somit steuert die Geschwindigkeitssteuerungsvorrichtung 10 das Fahrantriebssystem 5 zur Einstellung der Fahrgeschwindigkeit v1 auf 0.

In Fig. 6 ist das Bedienelement 11 maximal betätigt bzw. in der maximalen Betätigungslage L11". Des Weiteren ist das Begrenzungselement 25 derart bewegt bzw. eingestellt, insbesondere durch das weitere Bedienelement 12, insbesondere für eine maximale Fahrgeschwindigkeit vmax" gleich 3,25 Kilometer pro Stunde (km/h), wie in Fig. 14 durch die Dreiecks-Linie gezeigt, dass dieses die Verlagerung des weiteren Sensorteils 17, insbesondere durch das Bedienelement 11, begrenzt. Somit sind das Sensorteil 16 und das weitere Sensorteil 17 zueinander verlagert bzw. in der Verlagerungslage L15". Somit ist der Schaltzustand S18 geschlossen bzw. hoch, wie in Fig. 11 gezeigt, und somit gibt die Geschwindigkeitssteuerungsvorrichtung 10 das Fahrantriebssystem 5 frei. Zusätzlich ist somit das Sensorsignal S15 niedrig, wie in Fig. 12 gezeigt, und somit steuert die Geschwindigkeitssteuerungsvorrichtung 10 das Fahrantriebssystem 5 zur Einstellung der Fahrgeschwindigkeit v1 auf 3,25 km/h, wie in Fig. 14 gezeigt.

Bei Betätigung des Bedienelements 11 von der Bedienausgangslage L11' in eine Betätigungslage L11' zwischen der Bedienausgangslage L11' und der maximalen Betätigungslage L11" begrenzt anfangs das Begrenzungselement 25 die Verlagerung des weiteren Sensorteils 17 nicht. Somit sind das Sensorteil 16 und das weitere Sensorteil 17 zueinander nicht verlagert bzw. in der Sensorausgangslage L15`. Somit ist der Schaltzustand S18 niedrig und somit sperrt die Geschwindigkeitssteuerungsvorrichtung 10 das Fahrantriebssystem 5. Zusätzlich ist somit das Sensorsignal S15 hoch und somit steuert die Geschwindigkeitssteuerungsvorrichtung 10 das Fahrantriebssystem 5 zur Einstellung der Fahrgeschwindigkeit v1 auf 0, wie in Fig. 14 gezeigt.

Mit zunehmender Betätigung des Bedienelements 11 begrenzt das Begrenzungselement 25 die Verlagerung des weiteren Sensorteils 17. Somit sind das Sensorteil 16 und das weitere Sensorteil 17 zueinander verlagert bzw. in der Verlagerungslage L15". Somit ist der Schaltzustand S18 hoch und somit gibt die Geschwindigkeitssteuerungsvorrichtung 10 das Fahrantriebssystem 5 frei. Zusätzlich ist somit das Sensorsignal S15 niedrig und somit steuert die Geschwindigkeitssteuerungsvorrichtung 10 das Fahrantriebssystem 5 zur Einstellung der Fahrgeschwindigkeit v1 auf einen Wert zwischen 0, insbesondere 2, und 3,25 km/h, wie in Fig. 14 gezeigt.

Dies ermöglicht die Fahrtgeschwindigkeit v1 auf einen Wert kleiner als die eingestellte maximale Fahrgeschwindigkeit vmax" einzustellen, z.B. für Kurvenfahrten.

In Fig. 7 ist zwar das Begrenzungselement 25 derart bewegt bzw. eingestellt, insbesondere für eine maximale Fahrgeschwindigkeit vmax' gleich 4,5 km/h, wie in Fig. 14 durch die Rauten-Linie gezeigt, dass dieses die Verlagerung des weiteren Sensorteils 17 begrenzt. Jedoch ist das Bedienelement 11 nicht betätigt bzw. in der Bedienausgangslage L11'. Somit sind das Sensorteil 16 und das weitere Sensorteil 17 zueinander nicht verlagert bzw. in der Sensorausgangslage L15`. Somit ist der Schaltzustand S18 niedrig und somit sperrt die Geschwindigkeitssteuerungsvorrichtung 10 das Fahrantriebssystem 5. Zusätzlich ist somit das Sensorsignal S15 hoch und somit steuert die Geschwindigkeitssteuerungsvorrichtung 10 das Fahrantriebssystem 5 zur Einstellung der Fahrgeschwindigkeit v1 auf 0, wie in Fig. 14 gezeigt.

In Fig. 8 ist das Bedienelement 11 maximal betätigt bzw. in der maximalen Betätigungslage L11". Des Weiteren ist das Begrenzungselement 25 derart bewegt bzw. eingestellt, insbesondere für die maximale Fahrgeschwindigkeit vmax' gleich 4,5 km/h, dass dieses die Verlagerung des weiteren Sensorteils 17 begrenzt. Somit sind das Sensorteil 16 und das weitere Sensorteil 17 zueinander maximal, insbesondere maximal möglich, verlagert bzw. in der maximalen Verlagerungslage L15". Somit ist der Schaltzustand S18 hoch und somit gibt die Geschwindigkeitssteuerungsvorrichtung 10 das Fahrantriebssystem 5 frei. Zusätzlich ist somit das Sensorsignal S15 maximal niedrig und somit steuert die Geschwindigkeitssteuerungsvorrichtung 10 das Fahrantriebssystem 5 zur Einstellung der Fahrgeschwindigkeit v1 auf 4,5 km/h, wie in Fig. 14 gezeigt.

Bei Betätigung des Bedienelements 11 von der Bedienausgangslage L11' in eine Betätigungslage L11' zwischen der Bedienausgangslage L11' und der maximalen Betätigungslage L11" begrenzt bereits anfangs das Begrenzungselement 25 die Verlagerung des weiteren Sensorteils 17. Somit sind das Sensorteil 16 und das weitere Sensorteil 17 zueinander verlagert bzw. in der Verlagerungslage L15". Somit ist der Schaltzustand S18 hoch und somit gibt die Geschwindigkeitssteuerungsvorrichtung 10 das Fahrantriebssystem 5 frei. Zusätzlich ist somit das Sensorsignal S15 niedrig und somit steuert die Geschwindigkeitssteuerungsvorrichtung 10 das Fahrantriebssystem 5 zur Einstellung der Fahrgeschwindigkeit v1 auf einen Wert zwischen 0, insbesondere 2, und 4,5 km/h, wie in Fig. 14 gezeigt.

Dies ermöglicht die Fahrgeschwindigkeit v1, insbesondere und die maximale Fahrgeschwindigkeit vmax, insbesondere jeweils, variabel einstellen zu können, wie in Fig. 14 gezeigt.

Wie das mindestens eine gezeigte und zuvor beschriebene Ausführungsbeispiel deutlich macht, stellt die Erfindung ein vorteilhaftes Gartengerät bereit, das verbesserte Eigenschaften aufweist.

## Patentansprüche

1. Gartengerät (1), wobei das Gartengerät (1) aufweist:
- ein steuerbares Fahrantriebssystem (5), wobei das Fahrantriebssystem (5) zur Fortbewegung des Gartengeräts (1) ausgebildet ist, und
- eine Geschwindigkeitssteuerungsvorrichtung (10), wobei die Geschwindigkeitssteuerungsvorrichtung (10) ein benutzerbetätigbares Bedienelement (11) und eine Wegsensorvorrichtung (15) aufweist,
- wobei mindestens ein Sensorteil (16) der Wegsensorvorrichtung (15) translatorisch beweglich gelagert ist,
- wobei das Bedienelement (11) durch seine Betätigung zur translatorischen Verlagerung mindestens des Sensorteils (16) ausgebildet ist,
- wobei ein Sensorsignal (S15) der Wegsensorvorrichtung (15) von einer translatorischen Lage (L15`,L15 ") mindestens des Sensorteils (16) abhängig ist, und
- wobei die Geschwindigkeitssteuerungsvorrichtung (10) zur Steuerung des Fahrantriebssystems (5) zur variablen Einstellung einer Fahrgeschwindigkeit (v1) des Gartengeräts (1) in Abhängigkeit von dem Sensorsignal (S15) ausgebildet ist,
- wobei das Sensorteil (16) und ein weiteres Sensorteil (17) der Wegsensorvorrichtung (15) zueinander translatorisch beweglich gelagert sind,
- wobei das Sensorsignal (S15) von der Lage (L15`, L15") des Sensorteils (16) und des weiteren Sensorteils (17) zueinander abhängig ist,
- wobei die Geschwindigkeitssteuerungsvorrichtung (10) ein Begrenzungselement (25) aufweist,
**dadurch gekennzeichnet, dass**
- das Begrenzungselement (25) zur Begrenzung einer translatorischen Verlagerung des weiteren Sensorteils (17) bei Betätigung des Bedienelements (11) zur translatorischen Verlagerung des Sensorteils (16) und des weiteren Sensorteils (17) zueinander ausgebildet ist;
- das Begrenzungselement (25) beweglich gelagert ist,
- wobei das Bedienelement (11) durch seine Betätigung zur translatorischen Verlagerung des weiteren Sensorteils (17) ausgebildet ist, und
- wobei die Geschwindigkeitssteuerungsvorrichtung (10) ein weiteres benutzerbetätigbares Bedienelement (12) aufweist,
- wobei das weitere Bedienelement (12) durch seine Betätigung zur Bewegung des Begrenzungselements (25) zur variabel einstellbaren Begrenzung der Verlagerung des weiteren Sensorteils (17) ausgebildet ist.

2. Gartengerät (1) nach Anspruch 1,
- wobei die Wegsensorvorrichtung (15) einen Schalter (18) aufweist,
- wobei ein Schaltzustand (S18) des Schalters (18) von der Lage (L15`, L15") abhängig ist, und
- wobei die Geschwindigkeitssteuerungsvorrichtung (10) zum Freigeben und/oder Sperren des Fahrantriebssystems (5) in Abhängigkeit von dem Schaltzustand (S18) ausgebildet ist.

3. Gartengerät (1) nach Anspruch 1 oder 2,
- wobei die Wegsensorvorrichtung (15) ein Linearpotentiometer (19) aufweist, und
- wobei das Sensorsignal (S15) ein Potentiometersignal (S19) des Linearpotentiometers (19) ist.

4. Gartengerät (1) nach einem der vorhergehenden Ansprüche,
- wobei die Geschwindigkeitssteuerungsvorrichtung (10) ein weiteres Begrenzungselement (26) aufweist,
- wobei das weitere Begrenzungselement (26) zur Begrenzung der Betätigung des Bedienelements (11) und/oder der Verlagerung des Sensorteils (16) zur Begrenzung der Verlagerung des Sensorteils (16) und des weiteren Sensorteils (17) zueinander ausgebildet ist.

5. Gartengerät (1) nach einem der vorhergehenden Ansprüche,
- wobei das Begrenzungselement (25) zur variabel einstellbaren Begrenzung der Verlagerung des weiteren Sensorteils (17) einen Exzenterkulissenabschnitt (27) aufweist und rotatorisch beweglich gelagert ist.

6. Gartengerät (1) nach Anspruch 5,
- wobei bei Begrenzung der Verlagerung des weiteren Sensorteils (17) seine Verlagerungsachse (A17) und eine Oberfläche (O27) des Exzenterkulissenabschnitts (27) zueinander etwa orthogonal verlaufen.

7. Gartengerät (1) nach einem der vorhergehenden Ansprüche,
- wobei die Geschwindigkeitssteuerungsvorrichtung (10) eine Verrastungsmechanik (28) aufweist,
- wobei die Verrastungsmechanik (28) zur Verrastung der Einstellung des Begrenzungselements (25) ausgebildet ist.

8. Gartengerät (1) nach Anspruch 7,
- wobei die Verrastungsmechanik (28) federnd ist, insbesondere eine Körperfeder (29) aufweist.

9. Gartengerät (1) nach einem der vorhergehenden Ansprüche,
- wobei das weitere Bedienelement (12) rotatorisch beweglich gelagert ist.

10. Gartengerät (1) nach einem der vorhergehenden Ansprüche,
- wobei die Geschwindigkeitssteuerungsvorrichtung (10), insbesondere die Wegsensorvorrichtung (15), ein Sensorrückstellelement (20) aufweist, und
- wobei das Sensorrückstellelement (20) zur Kraftbeaufschlagung mindestens des Sensorteils (16), insbesondere und des weiteren Sensorteils (17) voneinander weg, in eine translatorische Sensorausgangslage (L15`) ausgebildet ist.

11. Gartengerät (1) nach einem der vorhergehenden Ansprüche,
- wobei das Bedienelement (11) beweglich gelagert ist,
- wobei die Geschwindigkeitssteuerungsvorrichtung (10) ein Bedienrückstellelement (21) aufweist, und
- wobei das Bedienrückstellelement (21) zur Kraftbeaufschlagung des Bedienelements (11) in eine Bedienausgangslage (L11`) ausgebildet ist.

12. Gartengerät (1) nach einem der vorhergehenden Ansprüche,
- wobei das Bedienelement (11) rotatorisch beweglich gelagert ist.

## Claims

1. Garden tool (1), wherein the garden tool (1) has:
- a controllable travel drive system (5), wherein the travel drive system (5) is designed to propel the garden tool (1), and
- a speed control device (10), wherein the speed control device (10) has a user-operable operating element (11) and a displacement sensor device (15),
- wherein at least one sensor part (16) of the displacement sensor device (15) is supported so as to be movable in translation,
- wherein the operating element (11) is designed by its operation to displace at least the sensor part (16) in translation,
- wherein a sensor signal (S15) of the displacement sensor device (15) is dependent on a translational position (L15', L15") of at least the sensor part (16), and
- wherein the speed control device (10) is designed for controlling the travel drive system (5) for the variable setting of a travel speed (v1) of the garden tool (1) in accordance with the sensor signal (S15),
- wherein the sensor part (16) and a further sensor part (17) of the displacement sensor device (15) are supported so as to be movable in translation relative to one another,
- wherein the sensor signal (S15) is dependent on the position (L15', L15") of the sensor part (16) and of the further sensor part (17) relative to one another,
- wherein the speed control device (10) has a limiting element (25),
**characterized in that**
- the limiting element (25) is designed to limit a translational displacement of the further sensor part (17) upon operation of the operating element (11) for translational displacement of the sensor part (16) and of the further sensor part (17) relative to one another;
- the limiting element (25) is supported so as to be movable,
- wherein the operating element (11) is designed by its operation to displace the further sensor part (17) in translation, and
- wherein the speed control device (10) has a further user-operable operating element (12),
- wherein the further operating element (12) is designed by its operation to move the limiting element (25) for variably settable limitation of the displacement of the further sensor part (17).

2. Garden tool (1) according to Claim 1,
- wherein the displacement sensor device (15) has a switch (18),
- wherein a switching state (S18) of the switch (18) is dependent on the position (L15`, L15"), and
- wherein the speed control device (10) is designed to enable and/or disable the travel drive system (5) in accordance with the switching state (S18).

3. Garden tool (1) according to Claim 1 or 2,
- wherein the displacement sensor device (15) has a linear potentiometer (19), and
- wherein the sensor signal (S15) is a potentiometer signal (S19) of the linear potentiometer (19).

4. Garden tool (1) according to any of the preceding claims,
- wherein the speed control device (10) has a further limiting element (26),
- wherein the further limiting element (26) is designed to limit the operation of the operating element (11) and/or the displacement of the sensor part (16) in order to limit the displacement of the sensor part (16) and of the further sensor part (17) relative to one another.

5. Garden tool (1) according to any of the preceding claims,
- wherein the limiting element (25) has an eccentric link section (27) for variably settable limitation of the displacement of the further sensor part (17) and is supported so as to be rotationally movable.

6. Garden tool (1) according to Claim 5,
- wherein, when the displacement of the further sensor part (17) is limited, its displacement axis (A17) and a surface (027) of the eccentric link section (27) extend approximately orthogonally to one another.

7. Garden tool (1) according to any of the preceding claims,
- wherein the speed control device (10) has a latching mechanism (28),
- wherein the latching mechanism (28) is designed to latch the setting of the limiting element (25).

8. Garden tool (1) according to Claim 7,
- wherein the latching mechanism (28) is resilient, in particular has a body spring (29).

9. Garden tool (1) according to any of the preceding claims,
- wherein the further operating element (12) is supported so as to be rotationally movable.

10. Garden tool (1) according to any of the preceding claims,
- wherein the speed control device (10), in particular the displacement sensor device (15), has a sensor return element (20), and
- wherein the sensor return element (20) is designed to apply force to at least the sensor part (16), in particular and the further sensor part (17) away from one another, into a translational sensor starting position (L15').

11. Garden tool (1) according to any of the preceding claims,
- wherein the operating element (11) is supported so as to be movable,
- wherein the speed control device (10) has an operating return element (21), and
- wherein the operating return element (21) is designed to apply force to the operating element (11) into an operating starting position (L11').

12. Garden tool (1) according to any of the preceding claims,
- wherein the operating element (11) is supported so as to be rotationally movable.

## Revendications

1. Outil de jardinage (1), l'outil de jardinage (1) présentant :
- un système d'entraînement de conduite (5) pouvant être commandé, le système d'entraînement de conduite (5) étant réalisé pour faire avancer l'outil de jardinage (1), et
- un dispositif de commande de vitesse (10), le dispositif de commande de vitesse (10) présentant un élément de commande (11) pouvant être actionné par l'utilisateur et un dispositif de capteur de déplacement (15),
- au moins une partie de capteur (16) du dispositif capteur de déplacement (15) étant montée de manière mobile en translation,
- l'élément de commande (11) étant réalisé, par son actionnement, pour le déplacement en translation d'au moins la partie de capteur (16),
- un signal de capteur (S15) du dispositif de capteur de déplacement (15) dépendant d'une position de translation (L15', L15'') d'au moins la partie de capteur (16), et
- le dispositif de commande de vitesse (10) étant réalisé pour commander le système d'entraînement de conduite (5) pour le réglage variable d'une vitesse de déplacement (v1) de l'outil de jardinage (1) en fonction du signal de capteur (S15),
- la partie de capteur (16) et une autre partie de capteur (17) du dispositif de capteur de déplacement (15) étant montées de manière mobile en translation l'une par rapport à l'autre,
- le signal de capteur (S15) dépendant de la position (L15', L15") de la partie de capteur (16) et de l'autre partie de capteur (17) l'une par rapport à l'autre,
- le dispositif de commande de vitesse (10) présentant un élément de limitation (25),
**caractérisé en ce que**
- l'élément de limitation (25) est réalisé pour limiter un déplacement en translation de l'autre partie de capteur (17) lors de l'actionnement de l'élément de commande (11) pour le déplacement en translation de la partie de capteur (16) et de l'autre partie de capteur (17) l'une par rapport à l'autre ;
- l'élément de limitation (25) est monté de manière mobile,
- l'élément de commande (11) étant réalisé, par son actionnement, pour le déplacement en translation de l'autre partie de capteur (17), et
- le dispositif de commande de vitesse (10) présentant un autre élément de commande (12) pouvant être actionné par l'utilisateur,
- l'autre élément de commande (12) étant réalisé, par son actionnement, pour déplacer l'élément de limitation (25) pour la limitation réglable de manière variable du déplacement de l'autre partie de capteur (17).

2. Outil de jardinage (1) selon la revendication 1,
- dans lequel le dispositif de capteur de déplacement (15) présente un commutateur (18),
- dans lequel un état de commutation (S18) du commutateur (18) dépend de la position (L15', L15''), et
- dans lequel le dispositif de commande de vitesse (10) est réalisé pour libérer et/ou bloquer le système d'entraînement de conduite (5) en fonction de l'état de commutation (S18).

3. Outil de jardinage (1) selon la revendication 1 ou 2,
- dans lequel le dispositif de capteur de déplacement (15) présente un potentiomètre linéaire (19), et
- dans lequel le signal de capteur (S15) est un signal de potentiomètre (S19) du potentiomètre linéaire (19).

4. Outil de jardinage (1) selon l'une quelconque des revendications précédentes,
- dans lequel le dispositif de commande de vitesse (10) présente un autre élément de limitation (26),
- dans lequel l'autre élément de limitation (26) est réalisé pour limiter l'actionnement de l'élément de commande (11) et/ou le déplacement de la partie de capteur (16) pour limiter le déplacement de la partie de capteur (16) et de l'autre partie de capteur (17) l'une par rapport à l'autre.

5. Outil de jardinage (1) selon l'une quelconque des revendications précédentes,
- dans lequel l'élément de limitation (25) présente une section de coulisse d'excentrique (27) pour la limitation réglable de manière variable du déplacement de l'autre partie de capteur (17) et est monté de manière mobile en rotation.

6. Outil de jardinage (1) selon la revendication 5,
- dans lequel, lors de la limitation du déplacement de l'autre partie de capteur (17), son axe de déplacement (A17) et une surface (O27) de la section de coulisse d'excentrique (27) s'étendent approximativement orthogonalement l'un par rapport à l'autre.

7. Outil de jardinage (1) selon l'une quelconque des revendications précédentes,
- dans lequel le dispositif de commande de vitesse (10) présente un mécanisme d'enclenchement (28),
- dans lequel le mécanisme d'enclenchement (28) est réalisé pour enclencher le réglage de l'élément de limitation (25).

8. Outil de jardinage (1) selon la revendication 7,
- dans lequel le mécanisme d'enclenchement (28) est à ressort, notamment comprend un ressort de corps (29).

9. Outil de jardinage (1) selon l'une quelconque des revendications précédentes,
- dans lequel l'autre élément de commande (12) est monté de manière mobile en rotation.

10. Outil de jardinage (1) selon l'une quelconque des revendications précédentes,
- dans lequel le dispositif de commande de vitesse (10), notamment le dispositif de capteur de déplacement (15), présente un élément de réinitialisation de capteur (20), et
- dans lequel l'élément de réinitialisation de capteur (20) est réalisé pour appliquer une force au moins à la partie de capteur (16), notamment et à l'autre partie de capteur (17) en les éloignant l'une de l'autre, dans une position initiale de capteur (L15') en translation.

11. Outil de jardinage (1) selon l'une quelconque des revendications précédentes,
- dans lequel l'élément de commande (11) est monté de manière mobile,
- dans lequel le dispositif de commande de vitesse (10) présente un élément de réinitialisation de commande (21), et
- dans lequel l'élément de réinitialisation de commande (21) est réalisé pour appliquer une force à l'élément de commande (11) dans une position initiale de commande (L11') .

12. Outil de jardinage (1) selon l'une quelconque des revendications précédentes,
- dans lequel l'élément de commande (11) est monté de manière mobile en rotation.
